# EUROPEAN PATENT APPLICATION

(11) **EP 1 522 489 A2**
(43) Date of publication of application: **13.04.2005**
(21) Application number: 04256226.4
(22) Date of filing: 08.10.2004
(51) Int. Cl.: B62K 5/04, B62K 15/00

(54) **Collapsible vehicle**

(30) Priority: 08.10.2003 US 509494 P
(71) Applicant: Pride Mobility Products Corporation, Exeter, Pennsylvania 18643-2694 (US)
(72) Inventor: Kosco, James M., West Wyoming, PA 18644 (US); Lamoreux III, Sterling G., Dallas, PA 18612 (US); Martis, Charles J., Harding, PA 18643 (US)
(74) Representative: Waller, Stephen

(57) **Abstract**

A powered vehicle (10) has a rear frame assembly (12) and a front frame assembly (14) that are pivotally attached to one another, and can be pivoted from a normal fully-extended operating position to a folded position in which the frame assemblies are positioned substantially adjacent to one another, effectively reducing overall vehicle length to about half. One or more latch members lock the front and rear frame assemblies in the fully-extended, normal operating position, and they may be used to lock the frame assemblies in the folded position. The seat support structure (18) may be integrated with the front (14) and rear frame (12) assemblies such that pivoting the frame assemblies toward the folded position collapses the seat support (18). The steering tiller (28) may also be collapsible toward the front frame assembly. The rear wheels (16) may be mounted on a transaxle that is pivotally mounted on the rear frame (12) assembly. An extendable handle may be provided to assist in the folding operation and to tow the collapsed vehicle on its anti-tip rollers.

## Description

### Field of the Invention

The invention relates to the field of powered vehicles, such as personal mobility vehicles or scooter type vehicles.

### Background of the Invention

Personal mobility vehicles are increasingly used by aged or infirm individuals who need assistance in moving about. Such vehicles typically have three or four main wheels for stability, and may have additional anti-tip rollers. They are limited in speed and other aspects for reasons commensurate with the reduced physical ability of the rider. While some regulatory bodies differentiate between scooters used as personal mobility vehicles and faster or larger personal mobility vehicles, no such differentiation is intend in this description. Nor is the invention limited to personal mobility vehicles for the aged and infirm. The invention is described herein as it is embodied in scooter-type personal mobility vehicles, but it may be applied in other types of personal vehicle, such as on or off-road scooters and carts.

Many available personal mobility vehicles include separable components to make them easier to store and transport. Typically the seat, batteries, rear motor assembly and front deck assembly of the frame can be separated from one another, and the steering tiller may be folded toward the frame.

It is contemplated that a personal vehicle wherein the various parts remain substantially integrated, but are capable of being folded or collapsed into a compact profile, would have some advantages over prior vehicles with separable components. The need for such a vehicle is addressed by the present invention.

### Summary of the Invention

Aspects of the invention include a personal mobility vehicle having a rear frame assembly and a front frame assembly that are pivotally attached to one another. One or more latch members are provided for locking the front and rear frame assemblies in the fully-extended, normal operating position, and they may be used to lock the frame assemblies in various pivoted positions, including the fully-folded position in which the frame assemblies are positioned substantially adjacent to one another, effectively reducing overall vehicle length to about half. A lift handle may be provided either on the front or the rear frame assemblies near the pivot connections to assist in collapsing the vehicle.

A seat support structure is attached to and supported by the rear frame assembly . Another aspect of the invention includes that the seat support structure can be collapsed onto the rear frame assembly. The vehicle may have a latch member for locking the seat support structure in the raised normal operating position and a latch member to lock the structure in the collapsed position, and the same latch member may perform both functions. The latch member for locking the front and rear frame assemblies may also be the same mechanism used to lock the seat support structure. The pivotal connection for the seat support structure may be arranged in such manner that the folding of the first and second frame assemblies causes the collapse of the seat support structure.

A steering tiller is operatively connected to the front steering wheel. Another aspect of the invention includes that the steering tiller may be easily disconnected at its lower end from the front steering wheel, and then pivoted back against the front frame member, again with the objective of a compact profile for storage and transport.

Vehicles using the invention may include one or more motor drive units, typically battery powered electric motors. The motor drive(s) may be operatively connected to one or both of rear wheels or to a forward steering wheel. Another aspect of the invention includes an embodiment wherein the rear wheels and/or drive motor(s) may be mounted on an axle that is pivotally connected to the rear frame assembly, such that the axle can be unlatched and pivoted into the rear frame assembly to reduce the overall profile.

The vehicle may have rear anti-tip rollers. Another aspect of the invention includes that anti-tip rollers may be positioned to extend beyond the end of the vehicle when it is collapsed, such that the rollers can be used to as trundles to tow the folded vehicle. In this configuration, the lift handle near the pivot connections of the front and rear frame assemblies is vehicle is preferably an extendable handle. This allows the handle to be extended above the bulk of the collapsed vehicle and used to tow the vehicle on the anti-tip rollers.

The latch member for locking and unlocking the pivotal joints may be any suitable form of latching mechanism. For example, it may be in the form of a latch having a spring biased pin which inserts through one of the frame assemblies and engages a slot on the other frame assembly. Removal of the pin from the retainer permits the frame assemblies to pivot in order to collapse the vehicle. A second pin receiving retainer may be provided at a different location on the latch for locking the folded frame assemblies in the collapsed position.

Other aspects and advantages of the features of the invention will become apparent by reviewing the description of the drawings provided herewith.

### Brief Description of the Drawings

For the purpose of illustrating the invention, there is shown in the drawings various forms that are presently preferred. It being understood, however, that this invention is not limited to the precise arrangements and constructions particularly illustrated.

Figure 1 is a rear perspective view of a personal vehicle with various frame coverings removed to expose the frame and features of the invention.

Figure 2 is a rear perspective view of the vehicle shown in Figure 1, wherein the front and rear frame assemblies have been folded together.

Figure 3 is an front perspective view of an embodiment of a personal vehicle using a front wheel motor drive and aspects of the invention.

Figure 4 shows an enlarged view of the connection between the front and rear frame assemblies of the vehicle of Figure 3.

Figure 5 is a side view of the vehicle of Figure 4 wherein the frame assemblies are pivoted at a 90 degree angle with respect to one another.

Figure 6 is a side perspective view of the vehicle shown in Figures 4 and 5 wherein the front and rear frame assemblies are folded together and the seat support structure is collapsed onto the rear frame assembly.

Figure 7 is a cross-sectional view of a portion of the front and rear frame assemblies showing details of the latch mechanism for locking and releasing the front and rear frame assemblies and seat support.

Figure 8 is an external view of a portion of the front and rear frame assemblies showing the latch mechanism.

Figure 9 is a cross-sectional perspective view of the latch mechanism with the frame assemblies in the collapsed position.

Figure 10 is a side view of a collapsible vehicle frame having a pivotal rear transaxle on which are mounted the rear wheels and drive motors. One wheel has been removed to expose details of the axle.

Figure 11 is a view of the frame of figure 10 showing the transaxle pivoted away from the rear frame assembly.

Figure 12 is a view of a personal mobility vehicle with an extendable lift handle setting upright on its anti-tip rollers in its collapsed condition.

Figure 13 is a view of the vehicle of Figure 12 being towed on the anti-tip rollers.

Figure 14 is a view of a vehicle having a quick disconnect fitting between the steering tiller and the front steering wheel.

### Detailed Description of the Drawings

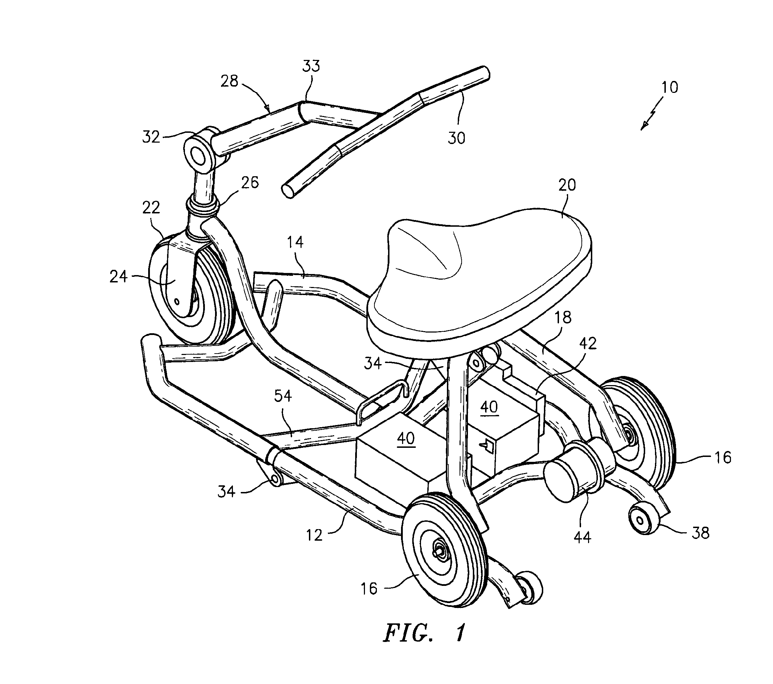

Referring now to the drawings, wherein like reference numerals identify like elements, Figure 1 depicts a personal vehicle 10 from which various body covering panels have been removed to expose the frame and features of the invention. The vehicle 10 includes a rear frame assembly 12 and a front frame assembly 14. The rear frame assembly 12 supports two rear wheels 16. A seat support structure 18 is provided to support a seat 20 in an elevated position above the vehicle base. The seat may be detachable from the seat support. A front steering wheel 22 is supported by the front frame assembly 14. The steering wheel 22 is mounted in a wheel fork 24 which is rotationally supported in a collar 26 that is secured to the front frame assembly 14. A steering tiller 28 extends upwardly from the collar 26 to a handle bar 30. The tiller 28 may include an adjustment hinge 32 for adjusting the angle of the tiller, and thus the height and proximity of the handlebar 30 to the seat 20. The tiller 28 may further be length-adjustable by a telescoping section 33.

The front and rear frame assemblies are pivotally connected to each other by hinges 34. A latch mechanism (which is more particularly discussed below in reference to more detailed drawings) is used to lock the front and rear frame assemblies in the fully-extended, normal operating position. When the latch is unlocked, the front and rear frame assemblies can be pivoted at the hinges 34 into a folded position in which the frame assemblies are positioned substantially adjacent to one another, effectively reducing overall length of the vehicle to about half.

The front and rear frame assemblies 12, 14 may be formed of hollow tubular metal members welded together to form a rigid structure. The rear frame assembly 12 may extend beyond the rear wheels to mount rear anti-tip rollers 38. A pair of batteries 40 and an electric power controller 42 may be positioned below the seat support structure 18 and seat 20. A drive motor 44 is connected to one or both of the rear wheels 16.

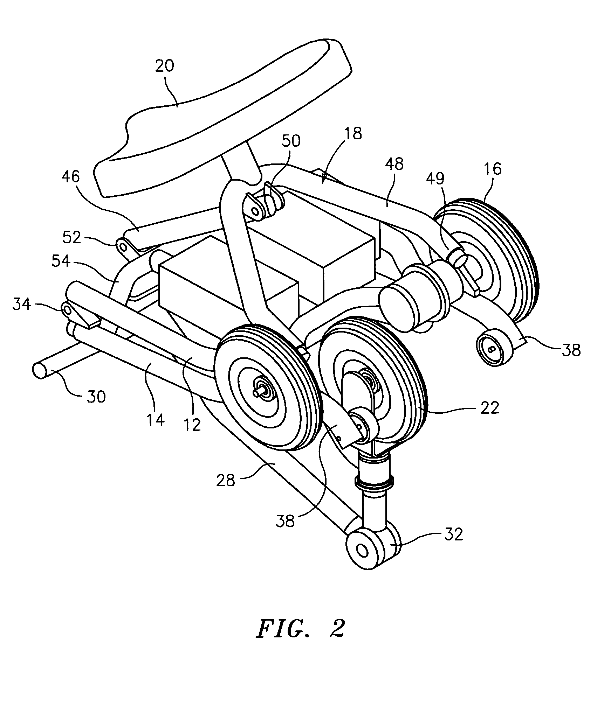

In Figure 2, the vehicle 10 is shown in a partially collapsed condition wherein the front frame assembly is positioned closely adjacent the rear frame assembly 14 after they have been pivoted about the hinges 34. In addition, the steering tiller 28 has been placed in a collapsed condition by adjusting the angle of the adjustment hinge 32 and shortening the length by using the telescoping joint 33. The seat support structure may also collapse onto the rear frame assembly, as described hereafter.

Figure 2 shows that the seat support structure 18 may generally comprise a tubular front support member 46 aligned with the vehicle's longitudinal centerline and extending back from the front center of the rear frame assembly, in conjunction with a bipod support member 48 extending from an apex under the seat post to two projected ends 49, giving the seat support structure 18 a tripod configuration. The ends of the bipod member are pivotally connected to the rear frame near the rear wheels, such as by a rotational attachment to the wheel axles. This attachment of the distal ends of the seat support bipod member 48 allows the bipod member 48 to rotate from the upright riding position to a collapsed position.

The front seat support member 46 is pivotally attached to the bipod member 48 and to the front frame assembly in a manner that allows the folding of the first and second frame assemblies to cause the seat support structure to collapse. The front support member 46 is pivotally attached to the bipod member 48 by a yoke and pin hinged connection 50. The opposite end of the front seat support member 46 is pivotally attached to a transverse member 54 of the front frame assembly 14 by a yoke and pin hinged connection 52. Thus, when the front and rear frame assemblies are pivoted into alignment for normal operation, the front seat support member 46 raises the seat support structure 18 to the normal riding position. Conversely, when the front frame assembly is folded to lie adjacent the rear frame, the front seat support member 46 allows the seat support structure 18 to collapse against the rear frame assembly. To make this folding operation from the normal extended position easier to accomplish, a lift handle 56 may be provided that extends upward from the transverse member 54 of the front frame assembly, or from some other convenient location near the hinged connection between the front and rear frame assemblies.

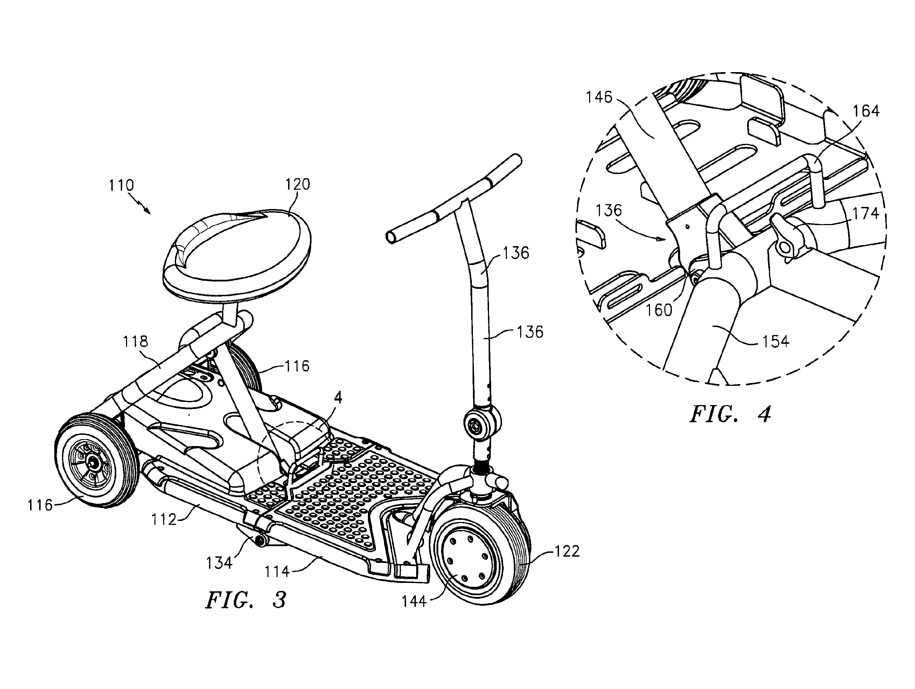

Figures 3 and 4 illustrate another embodiment of a personal utility vehicle 110, in which the drive motor is associated with the front steering wheel assembly 122. Like the previous embodiment, it has a rear frame assembly 112 and a front frame assembly 114, rear wheel assemblies 116, a seat support structure 118, a seat 120, a front steering wheel 122 and a steering tiller 128. This embodiment is depicted with its floor panels and other frame covers that were removed from the embodiment of Figure s 1 and 2, but it will be understood that the frames of both vehicles are largely the same. The rear frame assembly 112 is pivotably attached to the front frame assembly 114 by hinges 134. The is a hinged connection 160 between a crossing member 154 of the front frame assembly 114 and the forward support member 146 of the seat support 118. A latching mechanism 136 may be associated with this hinged connection. The floor panel and battery cover allow sufficient opening around the hinged connection 160 to allow the user manual access to a latch actuator 174 for the latching mechanism .

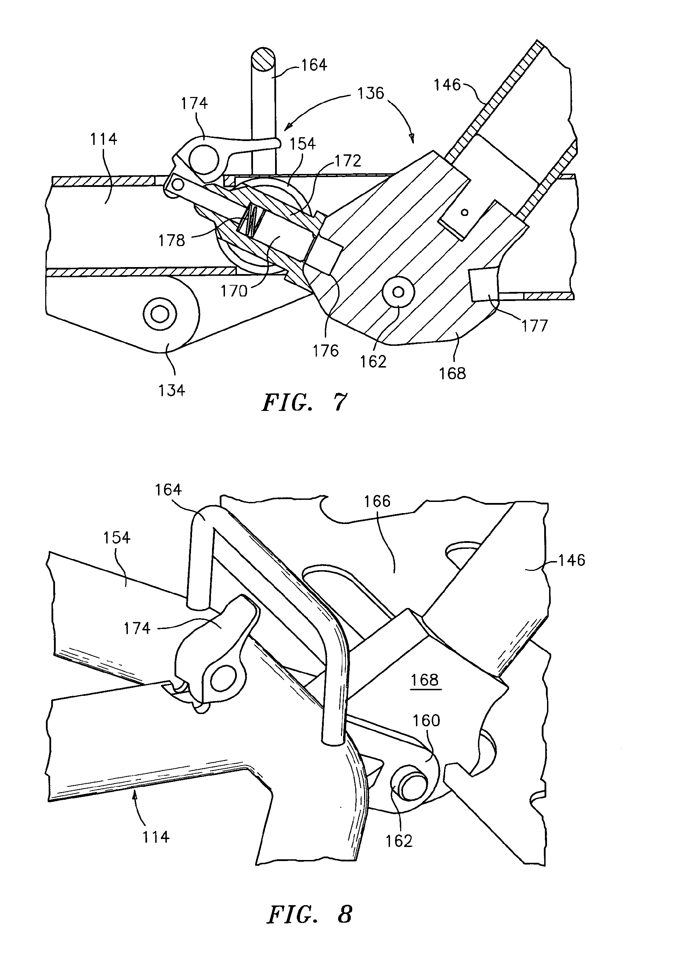

The latch mechanism 136 of this embodiment is shown in Figure 7 (cross-section). The latch mechanism generally comprises an abutment fitting 168 at the end of the front seat support member 146 that attaches to a yoke 160 and pin 162 hinge on the'front frame 114. The fitting 168 can rotate around the hinge pin 162 to abut against the transverse crossing member 154 to prevent the front and rear frames from over-rotating past the aligned normal driving position. A retaining slot 176 in the fitting 168 is adapted to receive a locking pin 170, which is mounted in a sleeve 172 positioned within the crossing member 154. The sleeve also encloses a spring 178 to push the pin 170 into the slot 176. An activation lever 174 provided on the front frame assembly 114 is operatively connected to the locking pin such that operating the lever withdraws the pin 170 from the slot 176 and allows the fitting 168 to rotate around the hinge pin 162 when the front frame is lifted by the handle 164. The fitting 168 may have a second retaining slot 177 positioned to receive the locking pin 170 when the front and rear frame assemblies are folded together, thus locking them in that position until the actuation lever 174 is again moved to release the fitting 168 to rotate.

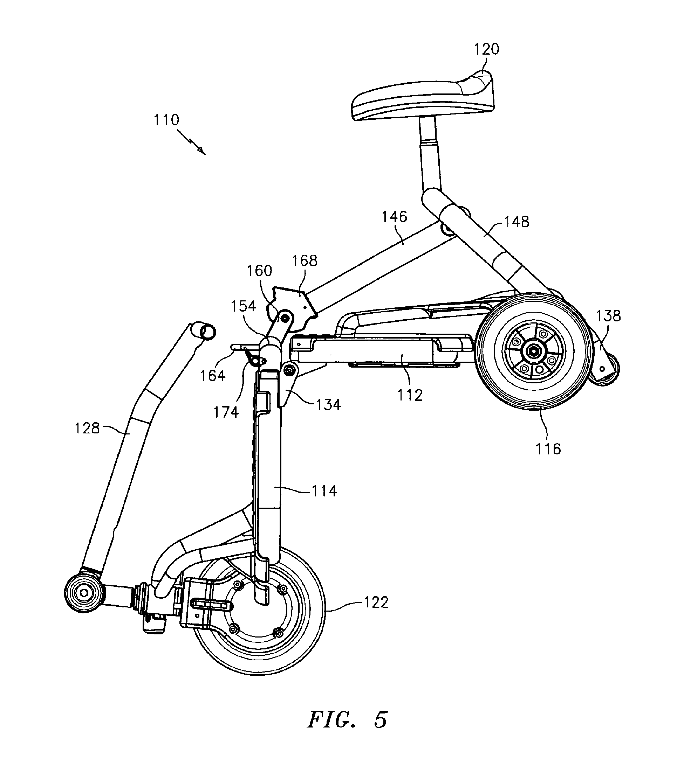

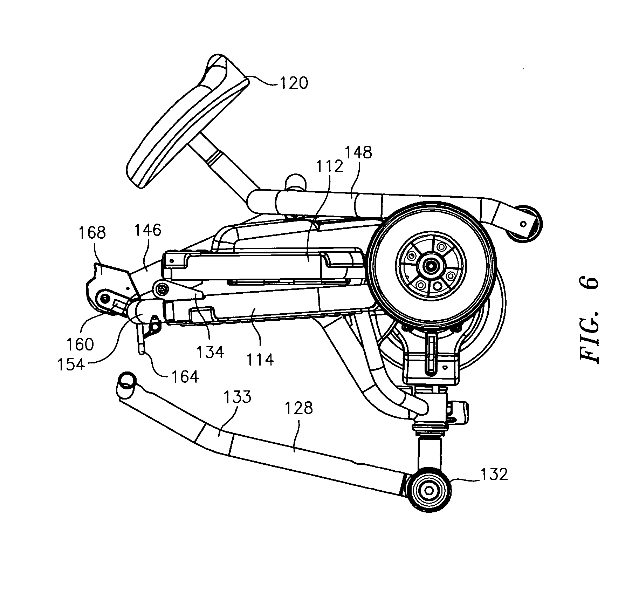

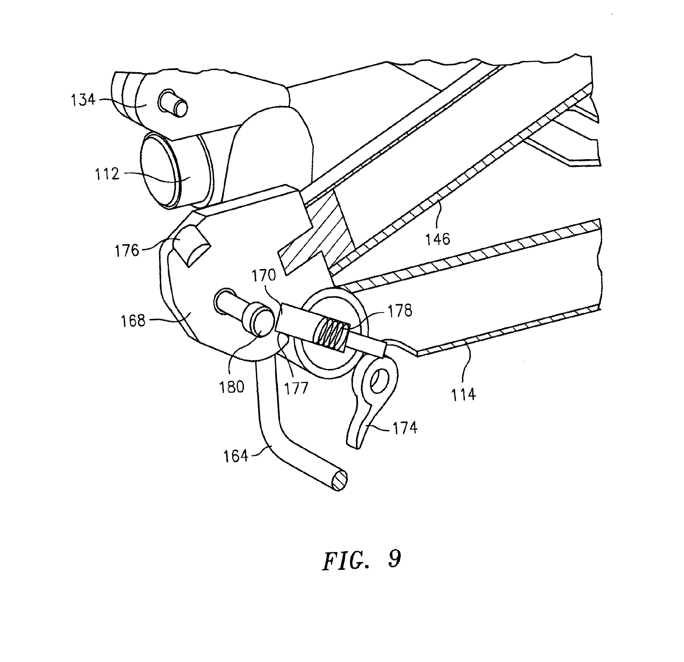

Figure 5 depicts the vehicle 110 partially folded. The latch actuator 174 was operated to unlatch the latch mechanism 136 and allow the abutment fitting 168 to rotate in the yoke 160. This unlatching also frees the frame hinges 134. The front frame assembly can be lifted by the handle 164 to start the folding at the hinges 134. At the same time, the movement of the front frame cross member 154 away from the seat support assembly allows the seat support to collapse onto the rear frame assembly. The actuator lever 174 can be released while the frame assemblies are being folded, and the spring will lock the latch mechanism when the pin 170 is aligned with the slot 177, in the collapsed position shown in Figures 6 and 9. The steering tiller 128 can be collapsed toward the front frame assembly and shortened, as shown in Figure 6, by loosening and adjusting the angle of the adjustment hinge 132 and shortening the length by using the telescoping joint 133.

There are, of course, many types of latching mechanisms that could be used instead of the locking pin and abutment fitting with slots as descried in this embodiment. The invention is not intended to be limited by the type of latching mechanism.

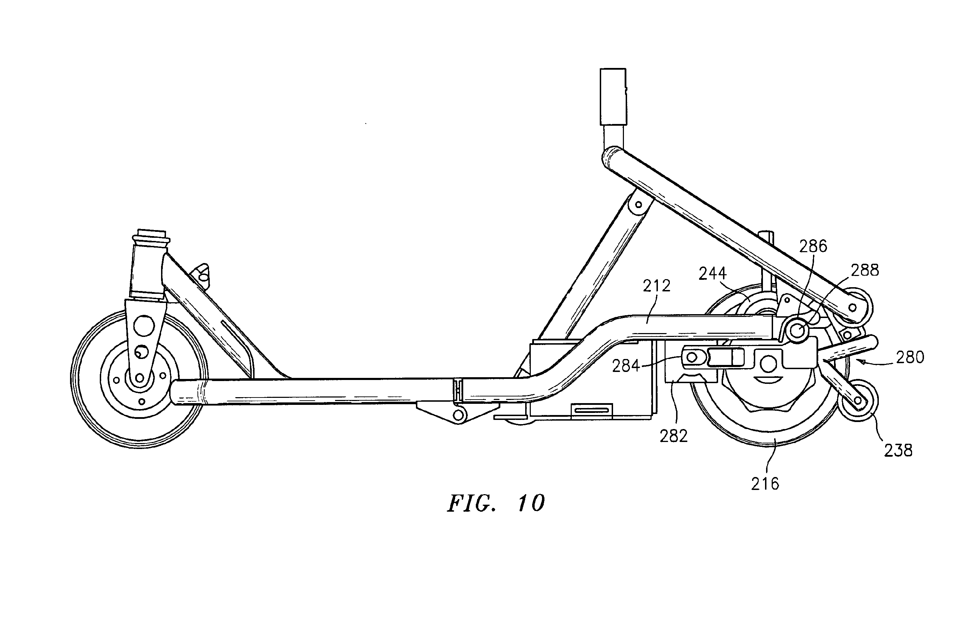

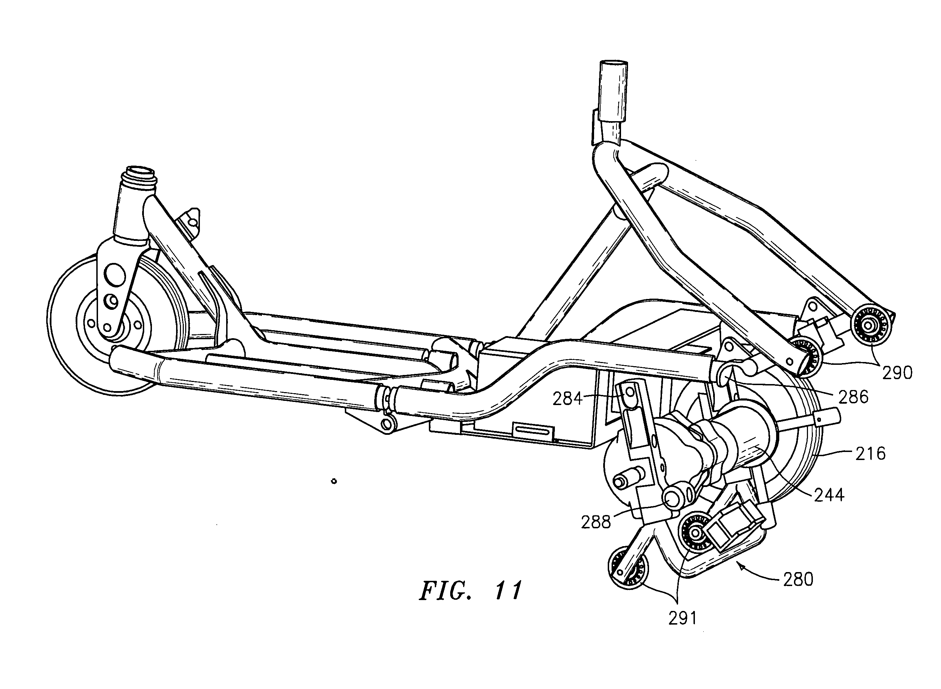

Figures 10 and 11 depict another embodiment of a collapsible vehicle wherein the rear wheels 216, drive motor(s) and anti-tip rollers are mounted on a transaxle assembly 280 that is pivotally connected to the rear frame assembly, in which the transaxle can be unlatched and pivoted into the rear frame assembly to reduce the overall profile. The rear frame assembly 212 has on each side a urethane mounting block 282 to which an end 264 of the transaxle assembly is pivotally mounted. The rear wheels 216 and motor(s) 244 are mounted on a section of the transaxle axle assembly. The rear frame has a semi-circular channel 286 on each side to receive a hard rubber shock absorber 288 of the transaxle assemble when the rear wheels are resting on the ground and the front and rear frame assemblies are aligned in the normal use position. The transaxle may be locked in this position by any appropriate locking mechanism, such as intermeshing teeth discs 290, 291 on the rear frame and on the axle, as depicted in figure 11. The axle assembly may also have rear extensions on which are mounted the anti-tip rollers. When the intermeshing lock discs are loosened and moved apart so that the teeth no longer mesh, the transaxle assembly 280 can be pivoted to rest against the underside of the rear frame 212.

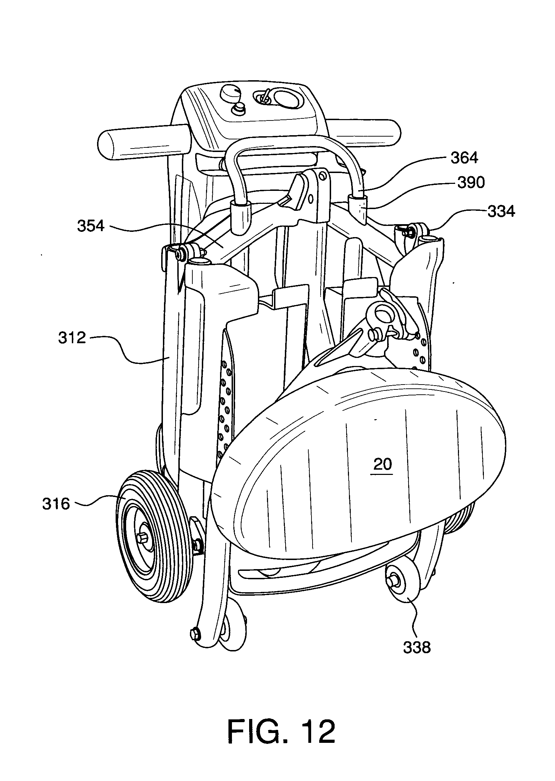

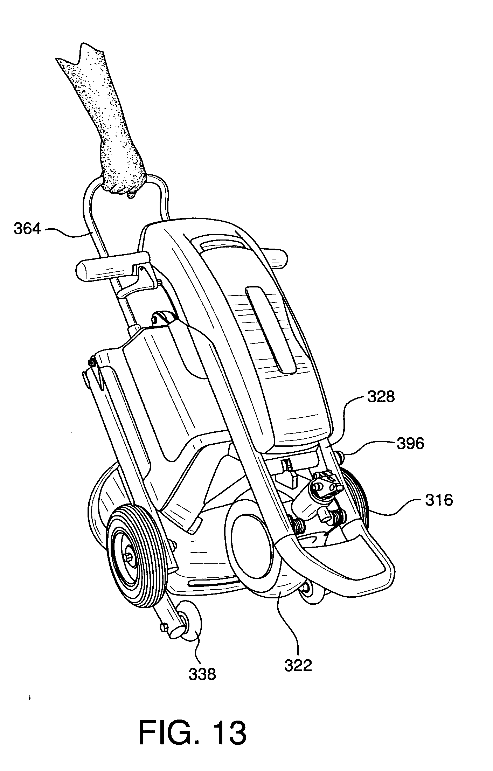

Another aspect of the invention is shown in Figures 12 and 13. The lift handle 364 may have extended forks in tubes 390 in the rear frame assembly 354. After the vehicle is folded into its compact profile, the handle extension can be drawn out to full length and the handle 364 can be used to tow the folded vehicle on the anti-tip rollers, as shown in Figure 13.

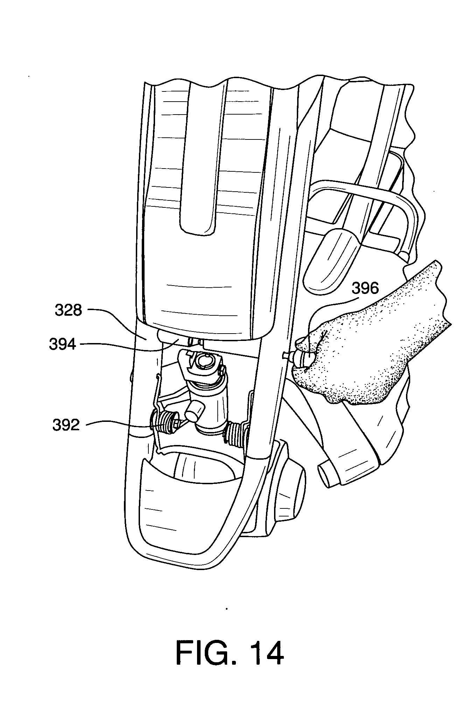

Another aspect of the invention is shown in Figures 13 and 14. The steering tiller 328 may be pivotally attached 392 to the front frame assembly and also be capable of easy disconnect from the front steering wheel assembly, as by the removable pin connection 394, 396 shown in Figure 14. Once disconnected from the front wheel assembly 322, but still attached to the front frame assembly, the tiller 328 can be collapsed into the front frame assembly to provide a very compact profile for storage or transport.

The drawings and description show particular forms which are presently preferred. It is contemplated that the invention could be embodied in other forms. Accordingly, reference should be made to the claims which follow to discern the full scope of the invention.

## Claims

1. A personal mobility vehicle comprising:
a front frame assembly;
a rear frame assembly;
a hinged connection between the front and rear frame assemblies that permits the front and rear frame assemblies to pivot between an aligned position for driving the vehicle and a folded position adjacent to each other for storage or transport; and
a latch member for locking the first and second frame assemblies in the aligned position for driving.

2. A vehicle as in claim 1, further comprising a seat support structure pivotally connected to the rear frame assembly and to the front frame assembly such that the seat support structure collapses toward the rear frame assembly when the front and rear frame assemblies are pivoted from the aligned position.

3. A vehicle as in claim 2, wherein the latch member locks the pivotal connection between the seat support structure and the front frame assembly when the front and rear frame assemblies are in the aligned position for driving.

4. A vehicle as in claim 1, further comprising a steering tiller operatively connected to a steering wheel assembly mounted on the front frame assembly, and means for pivoting the steering tiller into a folded position adjacent the front frame assembly.

5. A vehicle as in claim 1, wherein the means for pivoting the steering tiller includes a quick disconnect coupling between the tiller and the steering wheel assembly.

6. A vehicle as in claim 1, further comprising a lift handle provided near the hinged connection between the front and rear frame assemblies such that lifting by the handle when the latch member is unlocked causes the front and rear frame assemblies to begin pivoting toward the folded position.

7. A vehicle in claim 6, further comprising anti-tip rollers mounted on the rear frame assembly and extending beyond the front and rear frames assemblies when they are in the folded position such that the rollers serve as trundles on which to tow the vehicle.

8. A vehicle as claimed in claim 7, wherein the lift handle is extendable for ease in towing.

9. A vehicle as in claim 1, further comprising rear wheels mounted on a transaxle that is pivotally attached to the rear frame assembly such that the transaxle can pivot between an extended position wherein the rear frame assembly is supported on the rear wheels and a folded position wherein the rear wheels are alongside the rear frame assembly.
